(19) Europäisches Patentamt
European Patent Office
Office européen des brevets

(11) **EP 4 383 831 A1**

(12) **EUROPEAN PATENT APPLICATION**

(43) Date of publication:
**12.06.2024 Bulletin 2024/24**

(21) Application number: **22383197.5**

(22) Date of filing: **08.12.2022**

(51) International Patent Classification (IPC):
**H04W 52/02** $^{(2009.01)}$

(52) Cooperative Patent Classification (CPC):
**H04W 52/0258; H04W 52/0229**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Solutions and Networks Oy 02610 Espoo (FI)**

(72) Inventors:
• **Valcarce Rial, Álvaro Garches (FR)**
• **de Dios, Adrián Agustín Fraga (ES)**
• **Pastore, Adriano Espoo (FI)**

(74) Representative: **Balder IP Law, S.L. Paseo de la Castellana 93 5ª planta 28046 Madrid (ES)**

(54) **APPARATUS, METHODS, AND COMPUTER PROGRAMS**

(57) An apparatus comprises means for determining that a command is to be transmitted to a user equipment, the command controlling entering of an inactive mode by the user equipment, the determining using current state information associated with the user equipment, and means for causing the command to be transmitted to the user equipment.

## Fig. 7

EP 4 383 831 A1

**Description**

Field of the disclosure

The present disclosure relates to apparatus, methods, and computer programs for communication systems and in particular but not exclusively to apparatus, methods and computer programs relating to an inactive mode for a user equipment.

Background

A communication system can be seen as a facility that enables communications between two or more communication devices, or provides communication devices access to a data network.

A communication system may be a wireless communication system. Examples of wireless communication systems comprise public land mobile networks (PLMN) operating based on radio access technology standards such as those provided by 3GPP (Third Generation Partnership Project) or ETSI (European Telecommunications Standards Institute), satellite communication systems and different wireless local networks, for example wireless local area networks (WLAN). Wireless communication systems operating based on a radio access technology can typically be divided into cells, and are therefore often referred to as cellular systems.

A communication system and associated devices typically operate in accordance with one or more radio access technologies defined in a given specification of a standard, such as the standards provided by 3GPP or ETSI, which sets out what the various entities associated with the communication system and the communication devices accessing or connecting to the communication system are permitted to do and how that should be achieved. Communication protocols and/or parameters which shall be used by communication devices for accessing or connecting to a communication system are also typically defined in standards. Examples of a standard are the so-called LTE (Long-term Evolution) and 5G (5th Generation) standards provided by 3GPP.

Summary

According to an aspect, there is provided a method comprising: determining that a command is to be transmitted to a user equipment, the command controlling entering of an inactive mode by the user equipment, the determining using current state information associated with the user equipment; and causing the command to be transmitted to the user equipment.

The command may control the user equipment to enter the inactive mode when it is received by the user equipment.

The command may control the user equipment to enter the inactive mode after a given amount of time.

The determining may be based on a policy.

The determining by may be based on a learned policy.

The state information may comprise information indicating a current mode of the user equipment.

The current mode may comprise one of an inactive mode and/or an active mode.

The command may only be transmitted if the user equipment is in an active mode.

The state information may comprise information about a channel between the user equipment and a base station from which the command is to be transmitted.

The state information may comprise information about scheduling of data to be transmitted to the user equipment.

The state information may comprise information about a state of one or more timers running on the user equipment which control a current mode of the user equipment.

The determining that the command is to be transmitted to a user equipment may take into account a traffic pattern of the user equipment.

The determining that the command is to be transmitted to a user equipment may take into account one or more quality of service requirements associated with the user equipment.

One or more quality of service requirements associated with the user equipment may comprise latency and/or bit rate.

The determining that the command is to be transmitted to a user equipment may take into account into previous state information of the user equipment.

The method may comprise using an artificial intelligence agent to determine that a command is to be transmitted.

The method may comprise using an artificial intelligence agent to determine that a command is to be transmitted, said artificial intelligence agent receiving the current state information.

The artificial intelligence agent may use a learned policy to determine that a command is to be transmitted.

The artificial intelligence agent may be a reinforcement learning artificial intelligence agent.

The artificial intelligence agent may comprise a deep Q network arrangement.

The method may comprise providing a reward input to the artificial intelligence agent, the reward input providing information as to a satisfaction of the user equipment response to a transmitted command.

The method may comprise providing a reward input to the artificial intelligence agent, the reward input providing information as to a quality of service satisfaction of the user equipment response to a transmitted command.

The method may comprise providing a reward input to the artificial intelligence agent, the reward input providing information as to satisfaction of the quality of service requirements of the user equipment responsive to a transmitted command.

The quality of service requirements may comprise latency and/or bitrate.

The command may cause the user equipment to be in the inactive mode for a predetermined amount of time.

The method may comprise selecting the command from a plurality of different commands, each of the plurality of commands causing the user equipment to be in the inactive mode for a different predetermined amount of time.

The command may be is a layer 2 command.

The command may be provided by a Medium Access Control (MAC) Control Element (CE).

The method is performed by an apparatus. The apparatus may be provided in a or is a base station.

According to another aspect, there is provided an apparatus comprising: means for determining that a command is to be transmitted to a user equipment, the command controlling entering of an inactive mode by the user equipment, the determining using current state information associated with the user equipment; and means for causing the command to be transmitted to the user equipment.

The command may control the user equipment to enter the inactive mode when it is received by the user equipment.

The command may control the user equipment to enter the inactive mode after a given amount of time.

The determining may be based on a policy.

The determining by may be based on a learned policy.

The state information may comprise information indicating a current mode of the user equipment.

The current mode may comprise one of an inactive mode and/or an active mode.

The command may only be transmitted if the user equipment is in an active mode.

The state information may comprise information about a channel between the user equipment and a base station from which the command is to be transmitted.

The state information may comprise information about scheduling of data to be transmitted to the user equipment.

The state information may comprise information about a state of one or more timers running on the user equipment which control a current mode of the user equipment.

The means for determining that the command is to be transmitted to a user equipment may take into account a traffic pattern of the user equipment.

The means for determining that the command is to be transmitted to a user equipment may take into account one or more quality of service requirements associated with the user equipment.

One or more quality of service requirements associated with the user equipment may comprise latency and/or bit rate.

The means for determining that the command is to be transmitted to a user equipment may take into account into previous state information of the user equipment.

The determining means may comprise an artificial intelligence agent means.

The artificial intelligence agent means may use a learned policy to determine that a command is to be transmitted.

The artificial intelligence agent means may receive the current state information.

The artificial intelligence agent means may be a reinforcement learning artificial intelligence agent means.

The artificial intelligence agent means may comprise a deep Q network arrangement.

The apparatus may comprise means for providing a reward input to the artificial intelligence agent, the reward input providing information as to a satisfaction of the user equipment response to a transmitted command.

The apparatus may comprise means for providing a reward input to the artificial intelligence agent, the reward input providing information as to a quality of service satisfaction of the user equipment response to a transmitted command.

The apparatus may comprise means for providing a reward input to the artificial intelligence agent, the reward input providing information as to satisfaction of quality of service requirements of the user equipment responsive to a transmitted command.

The quality of service requirements may comprise latency and/or bitrate.

The command may cause the user equipment to be in the inactive mode for a predetermined amount of time.

The determining means may select the command from a plurality of different commands, each of the plurality of commands causing the user equipment to be in the inactive mode for a different predetermined amount of time.

The command may be is a layer 2 command.

The command may be provided by a Medium Access Control (MAC) Control Element (CE).

The apparatus may be provided in a or is a base station.

According to another aspect, there is provided an apparatus comprising at least one processor and at least one memory storing instructions that, when executed by the at least one processor cause the apparatus at least to: determine that a command is to be transmitted to a user equipment, the command controlling entering of an inactive mode by the user equipment, the determining using current state information associated with the user equipment; and cause the command to be transmitted to the user equipment.

The command may control the user equipment to enter the inactive mode when it is received by the user equipment.

The command may control the user equipment to enter the inactive mode after a given amount of time.

The determining may be based on a policy.

The determining by may be based on a learned policy.

The state information may comprise information indicating a current mode of the user equipment.

The current mode may comprise one of an inactive mode and/or an active mode.

The command may only be transmitted if the user equipment is in an active mode.

The state information may comprise information about a channel between the user equipment and a base station from which the command is to be transmitted.

The state information may comprise information about scheduling of data to be transmitted to the user equipment.

The state information may comprise information about a state of one or more timers running on the user equipment which control a current mode of the user equipment.

The apparatus may be caused to determine that the command is to be transmitted to a user equipment, taking into account a traffic pattern of the user equipment.

The apparatus may be caused to determine that the command is to be transmitted to a user equipment, taking into account one or more quality of service requirements associated with the user equipment.

One or more quality of service requirements associated with the user equipment may comprise latency and/or bit rate.

The apparatus may be caused to determine that the command is to be transmitted to a user equipment, taking into account into previous state information of the user equipment.

The at least one processor and the at least one memory storing instructions may be provided at least partially by an artificial intelligence agent.

The artificial intelligence agent may use a learned policy to determine that a command is to be transmitted.

The artificial intelligence agent may receive the current state information.

The artificial intelligence agent may be a reinforcement learning artificial intelligence agent means.

The artificial intelligence agent may comprise a deep Q network arrangement.

The apparatus may be caused to provide a reward input to the artificial intelligence agent, the reward input providing information as to a satisfaction of the user equipment response to a transmitted command.

The apparatus may be caused to provide a reward input to the artificial intelligence agent, the reward input providing information as to a quality of service satisfaction of the user equipment response to a transmitted command.

The apparatus may be caused to provide a reward input to the artificial intelligence agent, the reward input providing information as to satisfaction of quality of service requirements of the user equipment responsive to a transmitted command.

The quality of service requirements may comprise latency and/or bitrate.

The command may cause the user equipment to be in the inactive mode for a predetermined amount of time.

The apparatus may be caused to select the command from a plurality of different commands, each of the plurality of commands causing the user equipment to be in the inactive mode for a different predetermined amount of time.

The command may be is a layer 2 command.

The command may be provided by a Medium Access Control (MAC) Control Element (CE).

The apparatus may be provided in a or is a base station.

According to a further aspect, there is provided a computer program comprising instructions, which when executed by an apparatus, cause the apparatus to perform any of the methods set out previously.

According to a further aspect, there is provided a computer program comprising instructions, which when executed cause any of the methods set out previously to be performed.

According to an aspect there is provided a computer program comprising computer executable code which when cause any of the methods set out previously to be performed.

According to an aspect, there is provided a computer readable medium comprising program instructions stored thereon for performing at least one of the above methods.

According to an aspect, there is provided a non-transitory computer readable medium comprising program instructions which when executed by the apparatus, cause the apparatus to perform any of the methods set out previously.

According to an aspect, there is provided a non-transitory computer readable medium comprising program instructions which when executed cause any of the methods set out previously to be performed.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

Brief Description of the Figures

Some example embodiments will now be described, by way of example only, with reference to the accompanying Figures in which:

Figure 1 shows a schematic representation of a 5G system;
Figure 2 shows a schematic representation of an apparatus;
Figure 3 shows a schematic representation of a user equipment;
Figure 4 shows a heuristic method to control DRX behavior:
Figure 5 shows the behaviour of two UEs operating in accordance with the method of Figure 4;
Figure 6 shows the behaviour of two UEs operating in accordance with some embodiments;
Figure 7 shows an architecture, of some embodiments, provided in a base station;
Figure 8 shows a logic of a DRX agent of some embodiments;
Figure 9 shows a simulation of some embodiments and some baselines;
Figure 10a to 10c shows how different key performance indicators (KPIs) evolve as a function of the number of episodes for different training sessions;
Figure 11 shows a method of some embodiments;
Figure 12 shows a schematic representation of a non-volatile memory medium storing instructions which when executed by a processor allow a processor to perform one or more of the steps of any of the method of Figures 11.

Detailed Description

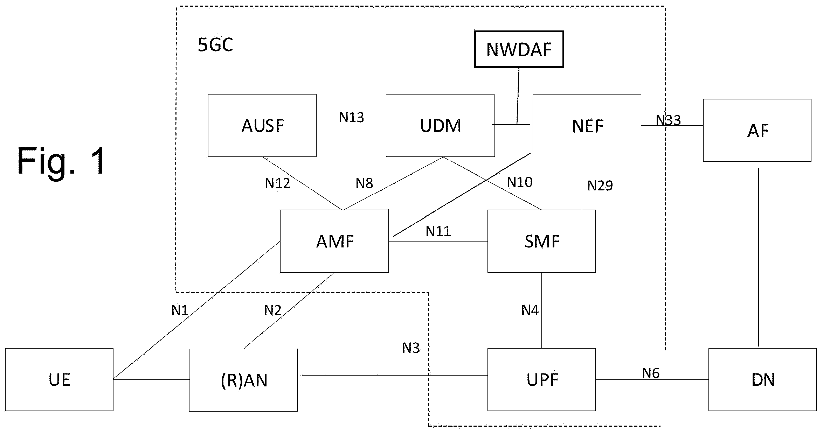

In the following certain embodiments are explained with reference to communication devices capable of communication via a wireless cellular system and mobile communication systems serving such communication devices. Before explaining in detail the exemplifying embodiments, certain general principles of a wireless communication system, access systems thereof, and communication devices are briefly explained with reference to Figures 1, 2 and 3 to assist in understanding the technology underlying the described examples.

Figure 1 shows a schematic representation of a communication system operating based on a 5$^{th}$ generation radio access technology (generally referred to as a 5G system (5GS)). The 5GS may a (radio) access network ((R)AN), a 5G core network (5GC), one or more application functions (AF) and one or more data networks (DN). A user equipment may access or connect to the one or more DNs via the 5GS.

The 5G (R)AN may comprise one or more base stations or radio access network (RAN) nodes, such as a gNodeB (gNB). A base station or RAN node may comprise one or more distributed units connected to a central unit.

The 5GC may comprise various network functions, such as an access and mobility management function (AMF), a session management function (SMF), an authentication server function (AUSF), a user data management (UDM), a user plane function (UPF) a network data analytics function (NWDAF) and/or a network exposure function (NEF). The operations performed by each of the various network functions of the 5G are described in 3GPP TS 23.501 and TS 23.502 version 16.

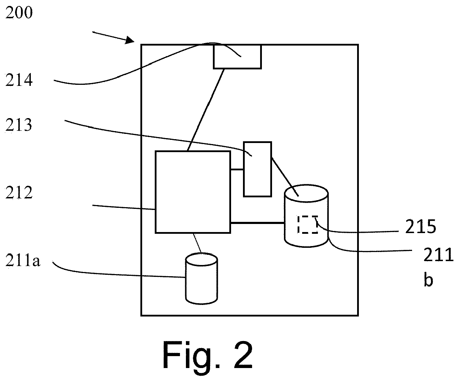

Figure 2 illustrates an example of an apparatus 200. The apparatus 200 may be provided in an access node. The apparatus 200 may have at least one processor and at least one memory storing instructions of one or more of the network functions of the 5GS that, when executed by the at least one processor cause one or more functions to be performed. In this example, the apparatus may comprise at least one random access memory (RAM) 211a, and/or at least one read only memory (ROM) 211b, and/or at least one processor 212, 213 and/or an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects.

Where the base station or RAN node comprises one or more distributed units connected to a central unit, the apparatus may be provided in a distributed unit and/or central unit.

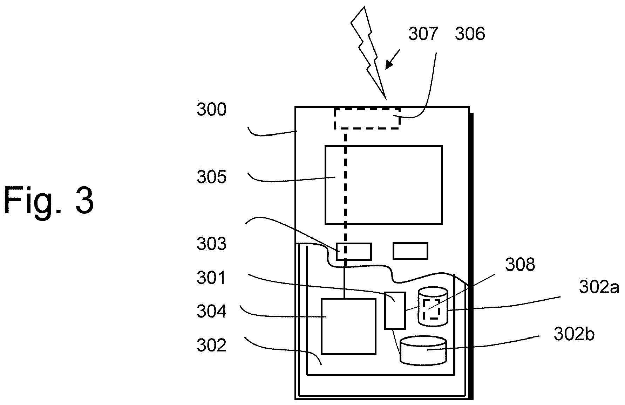

Figure 3 illustrates an example of a communications device 300. The communications device 300 may be any device capable of sending and receiving radio signals. Non-limiting examples of a communication device 300 comprise a user equipment, such as the user equipment shown illustrated in Figure 1, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device, a wearable device or any combinations of these or the like. The communications device 300 may send or receive, for example, radio signals carrying communications. The communications may be one or more of voice, electronic mail (email), text message, multimedia, data, machine data and so on.

The communications device 300 may receive radio signals over an air or radio interface 307 via appropriate apparatus for receiving and may transmit radio signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device and may include a single antenna or multiple antennas. The antenna arrangement may be an antenna array comprising a plurality of antenna elements.

The communications device 300 may be provided with at least one processor 301, and/or at least one ROM 302a, and/or at least one RAM 302b and/or other possible components 303 for use in software and hardware aided execution of tasks it is designed to perform, including control of access to and communications with access systems, such as the 5G RAN and other communication devices. The at least one processor 301 is coupled to the RAM 302b and the ROM 302a. The at least one processor 301 may be configured to execute instructions of software code 308. Execution of the instructions of the software code 308 may for example allow to the communication device 300 perform one or more operations. The software code 308 may be stored in the ROM 302a. It should be appreciated that in other embodiments, any other suitable memory may be alternatively or additionally used with the ROM and/or RAM examples set out above.

The at least one processor 301, the at least one ROM 302a, and/or the at least one RAM 302b can be provided on an appropriate circuit board, in an integrated circuit, and/or in chipsets. This feature is denoted by reference 304.

The communications device 300 may optionally have a user interface such as keypad 305, touch sensitive screen or pad, combinations thereof or the like. Optionally, the communication device may have one or more of a display, a speaker and a microphone.

In the following examples, the term UE or user equipment is used. This term encompasses any of the example of communication device 300 previously discussed and/or any other communication device.

An example of wireless communication systems are architectures standardized by the 3rd Generation Partnership Project (3GPP). The currently radio access technology being standardized by 3GPP is often referred to as 5G or NR. Other radio access technologies standardized by 3GPP include long term evolution (LTE) or LTE Advanced Pro of the Universal Mobile Telecommunications System (UMTS). Wireless communication systems generally include access networks, such as radio access networks operating based on a radio access technology that include base stations or a radio access network nodes. Wireless communication systems may also include other types of access networks, such as a wireless local area network (WLAN) and/or a WiMAX (Worldwide Interoperability for Microwave Access) network. It should be understood that example embodiments may also be used with standards for future radio access technologies such as 6G and beyond.

Discontinuous reception (DRX) is a technique to reduce the energy consumption of UEs. The base station uses DRX by commanding a UE to temporarily transition from the active state to a sleep state or inactive state that can last for several transmission time intervals (TTI). In the on state, the UE may decode the physical dedicated control channel (PDCCH) to listen for incoming data packets, whereas in the sleep state, the UE ceases to decode the PDCCH. While decoding the PDCCH in the on state, power consumption at the UE is larger than when the UE is in the sleep state. Since UEs are, in general, battery equipped devices, putting the UE to sleep yields power saving gains. Any power saving which is able to be achieved is advantageous, even where the UE is connected to a mains power supply.

DRX is useful with UEs such as wearable devices. Wearable devices are common consumer electronic devices today (e.g. smartwatches). The use of wearable devices in in enterprise and industrial environments for specialized applications is also expanding. Wearable devices may have batteries with low capacities. With wearable devices, it may be advantageous to minimize power usage to reduce the heating up of the device. Depending on where the wearable device is worn, heating of the device may cause discomfort to the user.

Whilst there may be particular advantages in using DRX with the UEs set out above, the use of DRX with any UE may be advantageous.

Discontinuous reception techniques have been described in standards such as 4G LTE (3GPP 36.321) and 5G New Radio (3GPP 38.321). Generally, for each UE, a period of predetermined duration (drx-cycle), controlled by DRX timers is defined. These timers are known by the BTS and UE. At the beginning of this period, the UE enters the on state to listen for incoming packets, for a pre-configured minimum duration (on duration). If no packets are received during this time window (on duration, drx-OnDurationTimer), the UE goes back to the sleep state until the next period starts. If packets are received during this time window (on duration), an inactivity timer is initialized, called the drx-InactivityTimer. Every new packet reception resets this timer. If this timer runs out, the UE switches to sleep mode until the next period starts (drx-cycle). This process is then repeated for as long as the UE is in RRC (radio resource control) connected mode.

The table below gives some examples of values for the timers discussed above for different types of traffic.

| Traffic Type | FTP traffic | Instant messaging | VoIP |
|---|---|---|---|
| drx-Cycle | 160 ms | 320 ms | 40 ms |
| drx-InactivityTimer | 100 ms | 80 ms | 10 ms |
| drx-OnDurationTimer | 8 ms | 10 ms | 4 ms |

In 3GPP 38.321, DRX-specific MAC (medium access control) control elements (CE) are defined. These DRX MAC CE let the base station instruct the UE to enter the sleep state immediately and without having to wait for a timer to expire. These CEs are part of a Layer-2 signalling mechanism in 5G. There are two such DRX MAC CEs currently defined. One of the DRX command is a long DRX command and another one is the short DRX command. These are largely unused in most commercial products.

Some embodiments relate to addressing the issue as to when to enable a sleep or inactive mode for a UE. This is not a straightforward issue. If UEs sleep for too long, they will save energy but latency will increase. Furthermore, UEs do not send channel state information (CSI) reports while in the sleep state. Deprecated CSI reports may lead to a poor selection of the modulation and coding scheme (MCS) of the first transmissions immediately following the sleep period.

For these reasons, it may be desirable to provide a DRX strategy or policy which on the one hand maximizes energy savings and on the other hand minimizes latency and avoids/reduces MCS degradation after a sleep period.

Some embodiments provide an algorithm executed by the BTS. The algorithm may be executed for a UE by taking current and past states into account. In embodiments, the algorithm may be executed for a plurality of UEs. Where possible, the algorithm may be executed for each UE associated with the base station or each UE of a given category. The algorithm may be executed for a subset of UEs associated with the base station or each UE of a given category. The state may relate to one or more of: buffer status of the UE, CSI associated with the UE, QoS (quality of service) requirements of the UE; and/or the like. The output of this algorithm may be a decision about whether to send a given UE into sleep mode, or not.

The inventors have noted that there are some deployments where timer-based DRX policies mean that there may be an underperformance from an energy savings viewpoint. In other words, the device in question may be able to operate in a more energy efficient manner. For example, this may be scenarios with sparse bursty traffic, such as unexpected alarms. Wireless body area networks (WBANs) is one example. WBANs are made of sensors (e.g. heart-monitoring sensors), that mostly perform transmissions according to some stationary traffic pattern. In addition, WBANs also transmit unexpected bursts of data when unusual events occur (e.g. cardiac arrhythmias). In some circumstances, such alarms might need to be relayed to other actuators inside of the body. For the purpose of battery-life maximization, the receivers of those actuators are better off in sleep mode. However, following the reception of an unexpected alarm, and under a timer-based DRX setting, the actuator's receiver needs to remain in the on state until their inactivity timer expires.

Other examples of such sensor-actuator use cases might involve, for instance, alarms in industrial settings and autonomous command-and-control systems.

The inventors have observed that the DRX-specific MAC CEs could bypass this waiting period by commanding the actuator to enter sleep mode immediately. However, when to send the DRX-specific MAC CEs without affecting the pre-existing background traffic is not a straightforward issue to address. Some embodiments may address this issue.

Some embodiments may aim to optimize or improve a CE-based DRX policy. This may be under one or more constraints and/or one or more performance metrics. For example the one or more constraints may be one or more QoS constraints. The one or more performance metrics may comprise one or more of minimizing UE energy consumption under latency and/or throughput constraints.

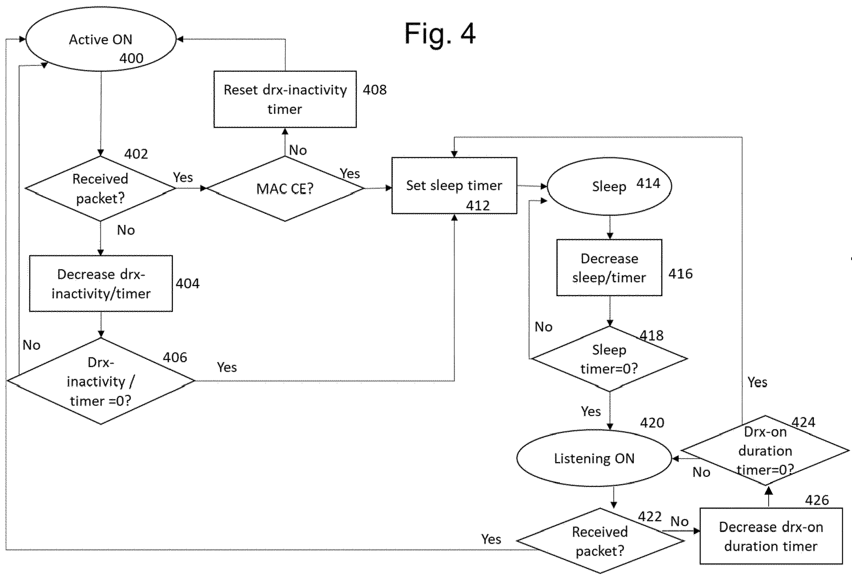

One heuristic method to control the DRX behaviour is shown in Figure 4.

When the UE is in the ON or active state as referenced 400, a determination is made as to whether a packet has been received, as referenced 402.

If a packet has not been received and the UE is still active, then the inactivity timer is decremented, as referenced 404.

As referenced 406, a determination is made as to if the inactivity timer has reached zero.

If the inactivity timer has not reached zero, then the method loops back to the state referenced 400.

If the inactivity timer has reached zero, then the method goes to the step referenced 412.

If a packet has been received while the UE is in the active state, then as referenced 410, a determination is made as to whether the received packet comprises a DRX MAC CE.

If the received packet does not comprise a DRX MAC CE, then the inactivity timer is reset as referenced 408. Then the method loops back to the state referenced 400.

If the received packet comprises a DRX MAC CE, then as referenced 412, the sleep timer is set.

The UE will then enter the sleep state as referenced 414.

As referenced 416, the sleep timer will be decreased.

As referenced 418, a determination is made as to whether or not the sleep timer has reached zero.

If the sleep timer has not reached zero, the method loops back to the sleep state referenced 414.

If the sleep timer has reached zero, the UE goes into a listening state as referenced 420.

As referenced 422, a determination is made as to if a packet is received. If so, the UE loops back to the active state 400. If not the on duration timer is decremented, as referenced 426.

As referenced 424, a determination is made as to if the on duration timer has reached zero. If not, the UE loops back to the listening state 420. If so, the UE loops back to step 412.

Thus a state change may occur via two different triggers:

Trigger A occurs when the DRX inactivity timer expires during the on state.
Trigger B occurs when the UE receives a DRX-specific MAC Control Element (CE).

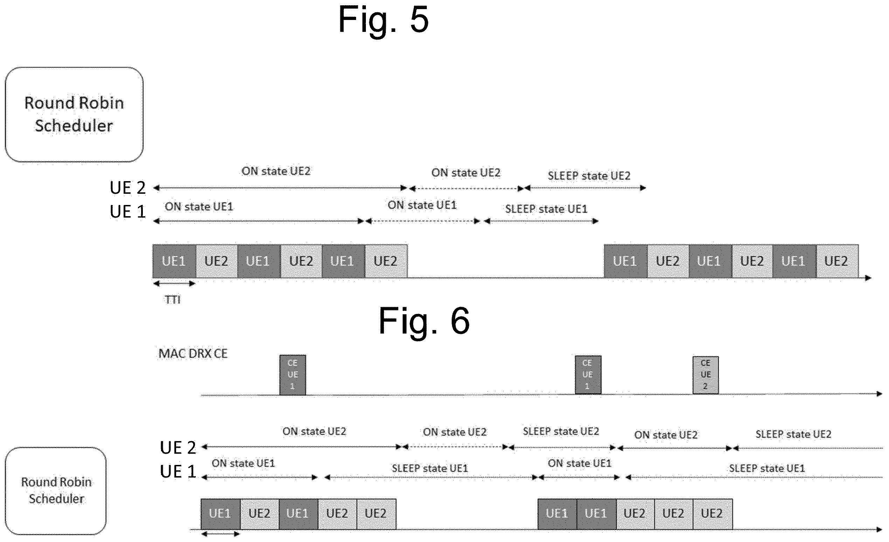

Figure 5 illustrates the process of Figure 4 for two UEs (UE1 and UE2) under the assumption that a round-robin scheduler is used. Initially, both UEs are in the on state because they are decoding the PDCCH. After receiving a data burst, the UEs remain in the on state for as long as the inactivity timer is active. Then the UEs transition to the sleep state.

The arrangement discussed in relation to Figures 4 and 5 may not be suitable for all types of traffic and may allow little fine-tuning.

Some embodiments may aim to provide a more flexible and/or faster DRX reconfiguration. This may be useful in WBAN and industrial use-cases. This may be useful where the UEs are sensors with unusual traffic profiles and/or relatively low-latency requirements. This may be useful with any user equipment which can be put into a sleep or inactive mode.

Some embodiments may use Layer-2 (e.g. MAC) signalling to provide a relatively fast reactivity.

Some embodiments may provide a mechanism which is able to handle one or more traffic patterns. Some embodiments may provide a mechanism which is able to handle a range of different traffic patterns. One or more of the following traffic patterns may be handled by some embodiments: Poisson-type traffic; bursty traffic; quasi-periodic traffic; and/or jittery traffic. Other traffic patterns may alternatively or additionally be supported.

Some embodiments may aim to maximize sleep time while respecting delay QoS requirements.

Some embodiments may use DRX MAC CE at layer 2 to command the UE to go to sleep. This may result the UE going into the sleep state more quickly as compared to using timers. The MAC signalling control may provide a reduced energy consumption and/or constrained latency at the UE side.

In some embodiments, a set of DRX rules may be learned. The rules may be learned by reinforcement learning. The set of rules will control when a UE is to be put into a sleep mode. Alternatively or additionally, the rules may define a length of time for that sleep mode.

It should be appreciated, that while in the following examples, the machine learning technique used is reinforcement learning, it should be appreciated that other embodiments may use any other suitable machine learning technique.

In some embodiments, the learned set of DRX rules may provide a DRX CE usage policy or may be used to enhance a DRX policy which uses timers, such as discussed in relation to Figure 4.

Reference is made to Figure 6 which shows a similar scenario to that outlined in relation to Figure 5. However, in this example, UE1 is put into a first sleep state using a first MAC CE. UE1 is then in an ON state to send and/or receive data and then immediately put into a second sleep state using a second MAC CE. In contrast, UE 2 is controlled mainly using timers and also by a MAC CE timer. However, UE2 spends more time in the on state than necessary. In the example of Figure 6, UE1 will save more energy than UE2 thanks to the fast L2 signalling via DRX-specific MAC CEs putting the UE1 quickly into the sleep mode whenever possible. In contrast, with UE2, some of the time, the timers are relied upon to put UE2 into the sleep mode.

Some embodiments may provide a control procedure for MAC DRX. This may be that is based on a data-driven approach. This may use reinforcement learning. This approach may not rely only on timers. Some embodiments may not use any timers. Some embodiments may additionally use one or more timers.

Some embodiments may use an objective reward function which takes one or more different objectives into account. Some embodiments may use an objective reward function which takes two or more different objectives into account. By way of example only, one example objective may be to save power/energy and/or another example objective may be latency related.

Some embodiments may use neural network architecture. Hyperparameter values may be tuned to the underlying BTS hardware requirements. The hardware requirements may relate to one or more of memory, frequency of inference, and/or the like.

Some embodiments may aim to provide one or more DRX policy models which can be reused across UEs.

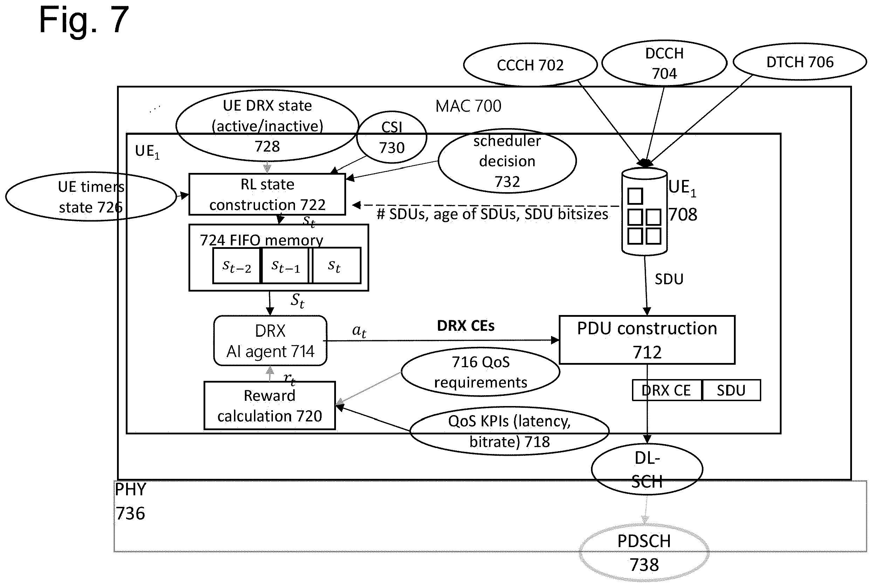

Figure 7 schematically shows an architecture provided in a base station of some embodiments. The architecture determines for a given UE when the DTX MAC CE is to be sent to that base station. The architecture has a MAC or layer 2 part 700. This part may build downlink MAC Packet Data Units (PDUs) at the BTS Layer 2. The MAC PDUs are passed down to Layer 1 (PHY) 736 for transmission via a PDSCH 738 or another suitable channel.

A scheduler (not shown) consults the DL data queues of each UE and decides whether to schedule a UE or not. This may be determined from the data in the data buffer 708 for the at UE. Once a UE is selected, a data-carrying MAC PDU is generated by a PDU construction function 712.

In some embodiments, a DRX agent 714 may generate one or more DRX CE (CEs). The PDU construction function 712 may append these DRX CEs to the PDU to send DRX control commands to the UE. The DRX agent 714 may be provided by AI (artificial intelligence) or ML (machine learning) functions.

The DRX agent 714 is configured to control and/or influence the usage of such DRX MAC CEs.

The DRX agent 714 agent may be trained in a UE-specific fashion. This may be used, for example, to support UEs that connect recurrently to the network. By way of example only, such UEs may be a robot or a sensor in a factor.

Alternatively or additionally, the DRX agent 714 may be trained in a UE-global fashion. This may be used, for example, to support a DRX policy in a given deployment. By way of example only, this may be used to support eMBB (enhanced mobile broadband) deployments.

The DRX agent 714 may be configured to take one or more actions. By way of example, the action may be:

generating a DRX CE for sending a UE to sleep; and/or
removing one or more previously-generated DRX CEs from control queues in case the scheduler did not select the UE.

In some embodiments, the transmission of DRX CEs may depends on the UE traffic pattern and/or on the behaviour of the network at large.

In some embodiments, a time-sequential machine learning approach is used to determine a DRX CE policy. A DRX CE policy will control if and/or when a DRX CE is transmitted and/or a length of time for that sleep mode associated with the DRX CE.

The DRX CE policy applied by the DRX agent 714 may be based on based on reinforcement learning RL.

The DRX CE policy applied by the DRX agent 714 may allow for a flexible adjustment for different traffic types.

The DRX CE policy applied by the DRX agent 714 may achieve operating points that strike an efficient trade-off between the savings in power consumption of the UE, and the maximum and/ or average latency.

The DRX agent 714 may thus be a RL-based agent, hosted at the BTS. The DRX agent 714 make takes sequential decisions on DRX CE addition and removal.

In some embodiments, once the DRX agent has been trained on a system with a single UE and for a range of different traffic patterns, the learned policy may be copied over to the different DRX modules at the BTS, where each module is associated to a different UE, as illustrated in Figure 7.

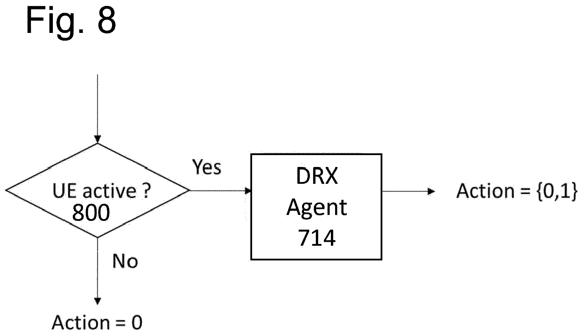

The logic of the DRX agent 714 will now be described with reference to Figure 8. As referenced 800, a determination is made as to whether the UE is active. If not, no action is taken. In the UE is active, then the DRX agent has two actions available. The actions available to the DRX agent 714 at each time slot are either to do nothing, or to generate a specific DRX CE.

In some embodiments, there may be a single DRX CE with a fixed length of time for which the UE is to sleep.

In other embodiments, there may be two DRX CEs - one associated with a shorter length of time to sleep and one associated with a longer length of time.

In other embodiments, there may be more than two DRX CEs, each associated with different sleep length intervals.

In other embodiments, there may be one DRX CE with information indicating the length of the sleep.

The following example has be two DRX CEs - one associated with a shorter length of time to sleep and one associated with a longer length of time. When the DRX agent 714 determines that that an action is to be taken, one of the two DRX CEs is selected. Depending on the selected CE, the UE will be sent into the sleep mode for a predetermined duration. During that period of time, the DRX agent 714 will "do nothing" in any case (since the UE will ignore any received CEs). This enforcement of the "do nothing" action can be viewed as the introduction of domain knowledge into the training process. This may achieve one or more of the following advantages:

accelerating training (by hard-coding a behaviour that is eventually learned anyway); and/or reducing energy consumption and memory usage at the BTS.

Referring back to Figure 7, a reward function 720 provides an input to the DRX agent 714. The reward signal rt provided to the agent during training takes into account whether the UE is active, as well as its "satisfaction" level. This may, for example, follow a logic such as set out below.

|  | SLEEP | ON |
|---|---|---|
| UE satisfaction == 1 | 3 | 1 |
| UE satisfaction != 1 | -1 | 0.5 |

The UE "satisfaction" may be equal to one if and only if, over the last $N_{SDUS}$, the fraction of SDUs (service data units) satisfying the delay constraint, exceeds a given threshold ($\beta$). Otherwise, the UE satisfaction is set to zero. This can be formulated mathematically as,

$$UE\ satisfaction\ [n] = \begin{cases} 1 & if\ \left( \frac{1}{N_{SDUS}} \sum_{i=0}^{N_{SDUS}-1} \mathbb{I}(\ D_i \leq \delta) \right) \geq \beta \\ 0 & otherwise \end{cases}$$

with $\beta$ the threshold describing the percentage of SDUs to be received within the delay constraints, $D_i$ denoting the end-to-end delay (that is, the number of TTIs elapsed between the moment the SDU was formed at the BTS, and the moment it was received at the UE) of the i-th SDU out of the last $N_{SDUS}$ successfully received SDUs. The indicator function $\mathbb{I}$ sets 1 when the measured delay $D_i$ satisfies the target delay, denoted by $\delta$, and 0, otherwise. For example, $\beta$ =0.9, $N_{SDUS}$ =20, $\delta$=0.040.

The reward function 720 is thus provided with QoS requirements 716 and QoS KPIs (key performance indicators) 718. The QoS KPIs may be latency and/or bitrate.

The reward function may aim to penalize the situations where the UE satisfaction is not fulfilled, assigning a reward equal to -1 every time that situation comes up. When the UE is in the on DRX state and UE satisfaction is fulfilled, there is a positive reward (i.e. 0.5 in example above). But the highest reward (i.e. 3 in the example above) is assigned whenever the UE is sleeping. This may be where this is the main energy-efficiency objective of DRX.

The reward function as set out above is one example of a reward function. In other environments, a different reward function may be used. The values, in the example above, depending on whether or not the UE is satisfied or not are by way of example only.

In some embodiments, it is preferred that when the UE is satisfied and the UE is in the sleep mode that a higher reward value be provided as compared to when the UE is in the active or on mode and satisfied. In some embodiments, it is preferred that when the UE is not satisfied the reward values be less than the values even when the UE is satisfied. In some embodiments, it is preferred that when the UE is unsatisfied and the UE is in the sleep mode that a lower reward value be provided as compared to when the UE is in the active or on mode and unsatisfied.

The values may be integers in some embodiments. In other embodiments, the values may be decimals. In some embodiments, the values may be a mix of positive and negative values. In some embodiments, the values may only be positive values. In some embodiments, the values may only be negative values.

In some embodiments, the DRX agent 714 is provided a RL state value St. The DRX agent 714 uses the RL state value St and the reward value $r_t$. t represents the current time interval. The current time interval may be a TTI. The RL state value St may be based on the state values of n preceding time intervals. The time intervals may be measured in TTIs. The value of n may be any suitable value. For example n may be 3. Of course n may be 1 or 2 or more than 3 in other embodiments.

The state value may be a single value or may be the state or values for a set of parameters.

In the example shown, a FIFO (first in first out) 724 or similar memory is provided. The individual n state values may be output to the DRX AI agent or the individual n state values may be aggregated with applied weighting and then provided to the DRX AI agent. In some embodiments, it is preferred that the individual values are provided to the DRX AI agent to improve the reinforcement learning of that agent.

The RL state values are provided by a RL state value function 722. The RL state value function receives an input relating to data in the buffer. This input may be number of SDUs, age of SDU, and/or SDU bit sizes. This may be input may be determined from the state of the data buffer 708 associated with the UE.

The RL state value function 722 may receive one of more of the following inputs:

state of the UE timers 726;
UE DRX state - active or inactive 728;
CSI 730; and/or
scheduler decision 732 - that is has the UE been scheduled for the time interval.

The data buffer 708 associated with the UE will receive SDUs of one or more of a CCCH (common control channel)702, a DCCH (dedicated control channel) 704 and a DTCH (dedicated traffic channel) 706. Those SDUs are output to the PDU construction function 712.

In some embodiments, a UE-specific embodiment would train one AI DRX agent for each UE in the network. This may improve performance in 5G networks with recurrent UEs (e.g. IoT networks, where the UEs are robots/sensors).

In other embodiments, a UE-global embodiment would train a single AI DRX agent with data collected from different UEs. This may improve performance in 5G networks with nomadic UEs (e.g. eMBB networks).

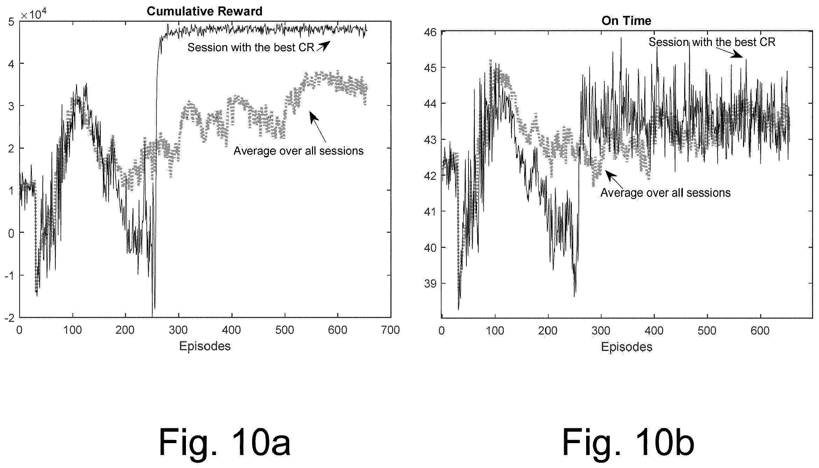

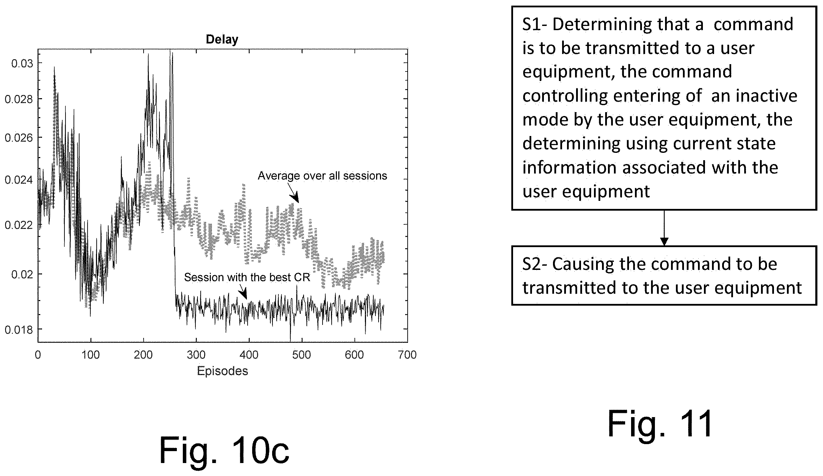

In terms of convergence, Figure 10a to c shows how different Key Performance Indicators (KPIs) evolve as a function of the number of episodes for different training sessions. Figure 10a shows the cumulative reward r, Figure 10b shows the percentage time when the UE is in the active mode KPI and Figure 10c shows the delay in seconds. In all cases, the average KPI across different training sessions is shown (dashed line),as well as results for the session that achieved the best cumulative reward (solid line).

An XR (extended reality)-based traffic model with a packet rate of 30 frames per second (fps) (with and average data rate of 30Mbps and periodicity approximately of 32 ms) and 4 UEs were assumed in this simulation. The default DRX-configuration assumes a drx-cycle of 16ms, and both the drx-OnDurationTimer and drx-InactivityTimer are set to 8 ms. Furthermore, a maximum delay of 40 ms has been considered.

The simulation results show that some embodiments learn a policy to generate the MAC CEs and maximize the Cumulative Reward (CR). This may minimizing the on time and control the maximum delay. The algorithm may be able to learn the policy with a reward function that aims to send the UEs to sleep whenever possible, and to ensure that for example, 90% of packets at the UE are received with a delay below a given threshold.

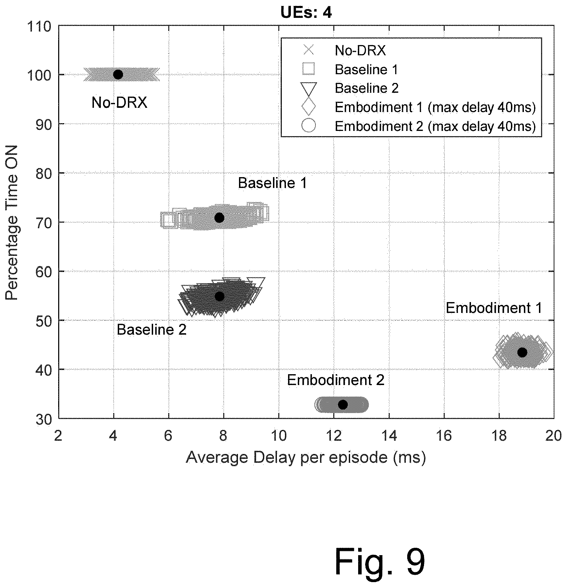

Reference is made to Figure 9 which shows a simulation of some embodiments and some baselines. The results depicted in Figure 9 present the percentage of time on as a function of the average delay.

No DRX: All UEs are always on, listening to the control channel (PDCCH). It can be seen that the "No DRX" scheme is the one that gets the minimum average delay (i.e., around 4 ms) at the cost of keeping the UEs always on.

Baseline 1: 3GPP DRX configuration with 16ms of sleep cycle, 8ms on and 8ms inactivity timer . Baseline 1 can decrease the percentage of time ON, up to 70% with a larger delay (i.e., around 8 ms).

Baseline 2: Same as Baseline 1, but when the last packet from the transmit buffer is transmitted, then the BTS appends a MAC CE to send to sleep the respective UE. Baseline 2 can decrease the percentage of time ON, up to 55%, respectively with a larger delay (i.e., around 8 ms).

Simulation embodiment 1: This simulation embodiment uses the same DRX configuration of Baseline 1 and uses intelligent UE-specific agents, where each agent is responsible of deciding whether or not to transmit DRX MAC CEs. The agent decides between: i) doing nothing (no MAC CE) or ii) commanding the UE to sleep (1 MAC CE). This embodiment may be a BTS-side implementation. Simulation embodiment 1 may reduce the percentage of time on up to 42% with an average delay of 19ms.

Simulation embodiment 2: In this simulation embodiment the DRX agents at the BS have access to a larger set of DRX-specific MAC CEs, each with its separate independent meaning. This larger set of DRX-specific MAC CEs increases the time resolution used to define the UE sleep duration.

An embodiment with a reasonable number of MAC CEs with low signalling overhead would use n different MAC CEs. In this example, there may be 6 different MAC CEs. This is by way of example and n may be more or less than 6. Each of the n different MAC CEs may be associated with a different maximum sleeping time. By way of example only, these maximum times may be 16ms, 10 ms, 8ms, 6ms, 4ms, and 2ms. However any other suitable values may be used. Both BTS and UEs would need to understand the meaning of these MAC CE.

Simulation embodiment 2 may be able to obtain a learned policy that maintains the UEs only 33% of the time on and achieves an average delay of 12 ms.

Some embodiments may provide at the UE side battery/energy savings and/or latency reductions.

Some embodiments may be used with power-limited devices, such as wearables and/or IoT sensors. However, this by way of example, and embodiments may be used with any UE which makes use of the DRX functionality.

Since the learned policy adapts itself to any type of environment, some embodiments may not have strong dependencies on other BTS functionalities (e.g., the scheduler).

The DRX agents of some embodiments may use reinforcement learning RL where "satisfactory" outcomes such as discussed above are rewarded and "unsatisfactory " outcomes are penalised. RL gathers inputs and receives feedback by interacting with the external world (i.e. the UE). The RL aims to output the best actions that it needs to take while interacting with that world. RL does not require training with a large pre-collected dataset. Rather, the 'data' is provided dynamically via feedback from the real-world environment with which DRX agent is interaction. With RL decisions are iteratively made over a sequence of time-steps. With RL, inference is run repeatedly with respect to the real-world environment. With RL the learning happens from experience by trial and error, with the AI agent learning from negative or positive reinforcement provided by the reward mechanism.

Some embodiments may use a Deep Q network (DQN) in the AI agent. A DQN is a neural network. This makes use of the principles of Q Learning which build a Q-table of state and action values. Fundamentally, a Q-table maps state and action pairs to a Q-value. As the number of states is large, a Q-function may be used instead of a Q-table, which achieves the same result of mapping state and action pairs to a Q value. The DQN estimates this Q function which maps a state to the Q values of all the actions that can be taken from that state. The reinforcement learning learns the action to be taken given current state.

Some embodiments may use real data to train the DRX agent. In other words, there may be no distinct training phase but rather the results provided by the DRX agent will improve over time. This is because the reward function is used to provide feedback to the DRX agent. In other embodiments, the DRX agent is trained with "real" data and then when the model or policy provided by the agent is trained, that model or policy can then be replicated. In this latter case, the reward calculation function may optionally be omitted.

Reference is made to Figure 11 which shows a first method of some embodiments.

This method may be performed by an apparatus. The apparatus may be in or be a base station. The apparatus may be or be in a central unit. The apparatus may be or be in a distributed unit. The apparatus may comprise suitable circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 2.

The method may be provided by computer program code or computer executable instructions.

The method may be implemented at least partly by a machine learning or artificial intelligence agent.

The method may comprise as referenced S1, determining that a command is to be transmitted to a user equipment, the command controlling entering of an inactive mode by the user equipment, the determining using current state information associated with the user equipment.

The method may comprise as referenced S2, causing the command to be transmitted to the user equipment.

It should be appreciated that the method outlined in Figure 11 may be modified to include any of the previously described features.

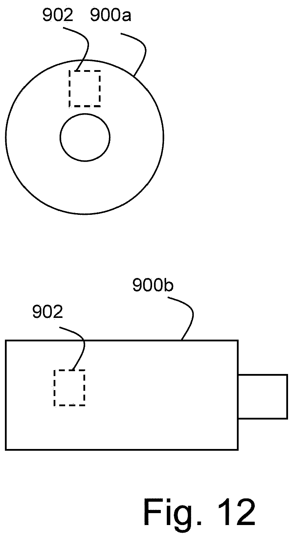

Figure 12 shows a schematic representation of non-volatile memory media 900a or 900b storing instructions and/or parameters which when executed by a processor allow the processor to perform one or more of the steps of the methods of any of the embodiments. The non-volatile memory media may be a computer disc (CD), or digital versatile disc (DVD) schematically referenced 900a or a universal serial bus (USB) memory stick schematically referenced 900b. The computer instructions or code may be downloaded and stored in one or more memories. The memory media may store instructions and/or parameters 902 which when executed by a processor allow the processor to perform one or more of the steps of the methods of embodiments.

Computer program code may be downloaded and stored in one or more memories of the device.

It is noted that while the above describes example embodiments, there are several variations and modifications which may be made to the disclosed solution without departing from the scope of the present invention.

It is noted that whilst some embodiments have been described in relation to 5G networks, similar principles can be applied in relation to any other standards including future standards.

Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the claims. The embodiments and features, if any, described in this specification that do not fall under the scope of the claims are to be interpreted as examples useful for understanding various embodiments of the disclosure.

It should be noted that different claims with differing claim scope may be pursued in related applications such as divisional or continuation applications.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. An apparatus comprising:

   means for determining that a command is to be transmitted to a user equipment, the command controlling entering of an inactive mode by the user equipment, the determining using current state information associated with the user equipment; and
   means for causing the command to be transmitted to the user equipment.

2. The apparatus as claimed in claim 1, wherein the state information comprises information indicating a current mode of the user equipment.

3. The apparatus as claimed in claim 2, wherein the current mode comprises one of an inactive mode and/or an active mode and the command is only transmitted if the user equipment is in an active mode.

4. The apparatus as claimed in any preceding claim, wherein the state information comprises one or more of:

   information about a channel between the user equipment and a base station from which the command is to be transmitted;
   information about scheduling of data to be transmitted to the user equipment; and/or
   information about a state of one or more timers running on the user equipment which control a current mode of the user equipment.

5. The apparatus as claimed in any preceding claim, wherein the means for determining that the command is to be transmitted to a user equipment takes into account one or more of:

   a traffic pattern of the user equipment; and/or
   one or more quality of service requirements associated with the user equipment.

6. The apparatus as claimed in claim 5 wherein one or more quality of service requirements associated with the user equipment comprise latency and/or bit rate.

7. The apparatus as claimed in any preceding claim, wherein the means for determining that the command is to be transmitted to a user equipment takes into account previous state information of the user equipment.

8. The apparatus as claimed in any preceding claim, comprising an artificial intelligence agent to determine that a command is to be transmitted, said artificial intelligence agent receiving the current state information.

9. The apparatus as claimed in claim 8, wherein the artificial intelligence agent is a reinforcement learning artificial intelligence agent.

10. The apparatus as claimed in any of claims 8 or 9, comprising means for providing a reward input to the artificial intelligence agent, the reward input providing information as to satisfaction of quality of service requirements of the user equipment responsive to a transmitted command.

11. The apparatus as claimed in any preceding claim, wherein the command causes the user equipment to be in the inactive mode for a predetermined amount of time.

12. The apparatus as claimed in any preceding claim, comprising means for selecting the command from a plurality of different commands, each of the plurality of commands causing the user equipment to be in the inactive mode for a different predetermined amount of time.

13. The apparatus as claimed in any preceding claim, wherein the command is a layer 2 command.

14. A method comprising:

determining that a command is to be transmitted to a user equipment, the command controlling entering of an inactive mode by the user equipment, the determining using current state information associated with the user equipment; and

causing the command to be transmitted to the user equipment.

15. A computer program comprising computer executable instructions which when executed cause the method of claim 14 to be performed.

Fig. 1

Fig. 2

200

214

213

212

211a

215

211
b

Fig. 3

# Fig. 4

Fig. 5

Round Robin Scheduler

UE 2
UE 1

ON state UE2
ON state UE1

ON state UE2
ON state UE1
SLEEP state UE1

SLEEP state UE2

UE1 | UE2 | UE1 | UE2 | UE1 | UE2

TTI

UE1 | UE2 | UE1 | UE2 | UE1 | UE2

Fig. 6

MAC DRX CE

CE UE 1

CE UE 1

CE UE 2

UE 2
UE 1

ON state UE2
ON state UE1

ON state UE2
SLEEP state UE1

SLEEP state UE2

ON state UE2
ON state UE1

SLEEP state UE1

SLEEP state UE2

UE1 | UE2 | UE1 | UE2 | UE2

UE1 | UE1 | UE2 | UE2 | UE2

Round Robin Scheduler

# Fig. 7

Fig. 7

MAC 700

CCCH 702    DCCH 704    DTCH 706

UE DRX state (active/inactive) 728    CSI 730    scheduler decision 732

UE$_1$

UE timers state 726

RL state construction 722    $s_t$

# SDUs, age of SDUs, SDU bitsizes

UE$_1$ 708

SDU

724 FIFO memory

| $s_{t-2}$ | $s_{t-1}$ | $s_t$ |

$s_t$

DRX AI agent 714    $a_t$    **DRX CEs**    PDU construction 712

716 QoS requirements

$r_t$

Reward calculation 720    | DRX CE | SDU |

QoS KPIs (latency, bitrate) 718

DL-SCH

PHY 736

PDSCH 738

EP 4 383 831 A1

# Fig. 8

EP 4 383 831 A1

```
                  UE active ?    Yes →    DRX
                     800                  Agent     → Action = {0,1}
                                           714
                      |
                      No
                      ↓
                 Action = 0
```

**UEs: 4**

Fig. 9

Fig. 10a

Fig. 10b

Fig. 10c

S1- Determining that a  command is to be transmitted to a user equipment, the command controlling entering of  an inactive mode by the user equipment, the determining using current state information associated with the user equipment

S2- Causing the command to be transmitted to the user equipment

Fig. 11

902 900a

900b

902

Fig. 12

Europäisches
Patentamt

European
Patent Office

Office européen
des brevets

# EUROPEAN SEARCH REPORT

**Application Number**

EP 22 38 3197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/242781 A1 (HUI JIE [US] ET AL) 19 September 2013 (2013-09-19) * paragraphs [0003] – [0005] * * figures 1-5 * * paragraphs [0013] – [0016] * * paragraphs [0025] – [0056] * ----- | 1-15 | INV. H04W52/02 |
| X | EP 4 099 130 A1 (INTEL CORP [US]) 7 December 2022 (2022-12-07) * paragraphs [0001], [0002] * * figures 3-7 * * paragraphs [0004] – [0062] * ----- | 1-15 | |
| X | US 2020/045164 A1 (KWATRA SHIKHAR [US] ET AL) 6 February 2020 (2020-02-06) * paragraph [0003] * * figures 3-6 * * paragraphs [0013] – [0027] * ----- | 1-15 | |
| | | | **TECHNICAL FIELDS SEARCHED (IPC)** |
| | | | H04W |

The present search report has been drawn up for all claims

| Place of search | Date of completion of the search | Examiner |
|---|---|---|
| The Hague | 10 May 2023 | Schmid, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 38 3197

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2023

| Patent document cited in search report | | Publication date | Patent family member(s) | | Publication date |
|---|---|---|---|---|---|
| US 2013242781 | A1 | 19-09-2013 | US 2013242781 | A1 | 19-09-2013 |
| | | | US 2018035371 | A1 | 01-02-2018 |
| | | | WO 2013138545 | A1 | 19-09-2013 |
| EP 4099130 | A1 | 07-12-2022 | EP 4099130 | A1 | 07-12-2022 |
| | | | US 2022391003 | A1 | 08-12-2022 |
| US 2020045164 | A1 | 06-02-2020 | NONE | | |

EPO FORM P0459

For more details about this annex : see Official Journal of the European Patent Office, No. 12/82